# EUROPEAN PATENT APPLICATION

(11) **EP 4 163 612 A1**
(43) Date of publication of application: **12.04.2023**
(21) Application number: 21306406.6
(22) Date of filing: 06.10.2021
(51) Int. Cl.: G01L 1/22, G01L 3/14, G01L 5/00, G01L 5/22, B25J 13/08

(54) **SENSING MEMBRANE FOR TORQUE SENSOR DEVICE AND TORQUE SENSOR DEVICE**

(71) Applicant: MEAS France, 31027 Toulouse Cedex 3 (FR)
(72) Inventor: FAYE, Papa Aldemba, 78340 Les Clayes Sous-Bois (FR); VIGNOLLES, Arthur, 78340 Les Clayes Sous-Bois (FR)
(74) Representative: Grünecker Patent- und Rechtsanwälte PartG mbB

(57) **Abstract**

The present disclosure provides a sensing membrane (200) for a torque sensor device (100, 10') and a torque sensor device (100, 100') comprising such a sensing membrane (200). The sensing membrane (200) comprises a first main surface 8201) forming a top of the sensing membrane (200), a plurality of measurement transducers (210) former over the first main surface (201) and a second main surface (202) opposite to the first main surface (201) and forming a bottom of the sensing membrane (200). Furthermore, the sensing membrane (200) comprises a thickening element (204) formed below the second main surface (202) opposite to the measurement transducers (210).

## Description

### Field of the Invention

The invention relates to a sensing membrane for a torque sensor device and a torque sensor device comprising such a sensing membrane and configured for determining a torque of some object, for example, a driven shaft or a robot joint.

### Background of the Invention

Accurately detecting the torque of an object, for example, some driven shaft or joint, represents a problem that is of relevance in a plurality of applications. A particular application relates to the torque measurement during the movement of joints of robots. In a joint of a robot on which loads in various directions act, in order to accurately detect a torque in the rotation direction acting on the joint, usually some cancellation mechanism have to be provided in order to exclude loads in directions other than the rotation direction from the measurement process. However, reliable exclusion of such loads is very difficult.

In the art it is known to compensate for loads in directions other than the rotation direction by means of Wheatstone circuitries and torques sensors comprising radially elastic torque transfer portions (see, for example, WO 2018/041948 A1).

However, known torque sensor devices still suffer from a lack of accuracy of the torque measurements and exhibit relatively bulky configurations. Furthermore, conventional torque sensor devices are sensible against even minute dislocations of the measuring transducers formed on the sensitive membranes that, particularly, negatively affect the accuracy of measurements of torques.

Consequently, there is a need for a torque sensor device that allows for reliably accurate torque measurements and that can be formed in a compact light-weighted configuration that, in particular, allows for some manufacturing tolerance with respect to the positioning of the measurement transducers.

### Description of the Invention

In order to address the above-mentioned need the invention provides a sensing membrane for a torque sensor device and a torque sensor device, in particular, a torque sensor device comprising such a sensing membrane.

It is provided a sensing membrane for a torque sensor device wherein the sensing membrane comprises a first main surface forming a top of the sensing membrane, a plurality of measurement transducers former over the first main surface (in a transducers area of the sensing membrane) and a second main surface opposite to the first main surface and forming a bottom of the sensing membrane. A thickening element (raiser) is formed below the second main surface (for example, only) opposite to the measurement transducers, i.e. the thickening element extends from the second main surface in a direction opposite to the direction towards the top of the sensing membrane. Moreover, the thickening element extends parallel to the second main surface. The thickening element may be formed integrally with the sensing membrane.

Provision of such a thickening element is counterintuitive since in the art the cross sections of measurement transducers zone are intentionally reduced as much as possible in order to increase the application of stresses caused by the torques that are to be measured. However, it was found that the provision of the thickening element gives raise to a more homogeneous stress/strain applied to a transducers area (measurement area) of the sensing membrane and, therefore, manufacturing tolerances do less significantly negatively affect measurement results. Particularly, dislocations of the measurement transducers caused by manufacturing tolerances can be counterbalanced by the more homogeneous application of strains to the transducers areas. Desirably, insensitivity against cross loads can be obtained/increased by the provision of the thickening element.

The sensing membrane may be a circular sensing membrane and the measurement transducers may be arranged in a circular transducers area of the sensing membrane and the thickening element may be arranged opposite to the circular transducers area, in particular, only opposite to the circular transducers area in order to provide for a higher stiffness (insensitivity) against tilting moments. Particularly, the thickening element may be continuously or discontinuously formed along a circle.

In principle, the geometrical shape of the thickening element is not limited. According to an embodiment, the thickening element is or comprises a u-shaped or v-shaped step portion that might result in a particular high stiffness against tilting moments that could affect the torque measurement. The u-shaped or v-shaped step comprises sidewalls that extend perpendicular from the second main surface of the sensing membrane.

According to an embodiment, the thickening element extends perpendicular to the second main surface with a height of at least 25 % of the thickness of the sensing membrane in a transducers area wherein the measurement transducers are positioned (or an average thickness of the sensing membrane) and at most 150 % of the thickness of the sensing membrane in the transducers area (or an average thickness of the sensing membrane). The cited parameter range may be advantageous with respect to insensitivity to manufacturing tolerances and, in particular, stiffness against tilting moments.

The measurement transducers may comprise or consist of at least one of silicon gages, foil strain gages, and thin layer strain gages. The arrangement of the measurement transducers according to particular embodiments may be as follows. For example, the measurement transducers are positioned axially symmetrically to an axis extending through the center of the sensing membrane in a direction perpendicular to the first and the second main surfaces of the sensing membrane. For example, the measurement transducers comprise at least two pairs or four pairs of measurement transducers and wherein the two measurement transducers of each of the pairs of measurement transducers are located symmetrically to an axis extending through the center of the sensing membrane in a direction parallel to the first and the second main surfaces of the sensing membrane. If radial loads are not to be concerned about, limitation two only two pairs of measurement transducers is possible. For example, four pairs of measurement transducers are provided and for each of the four pairs of measurement transducers it holds that an axis extending through the center of the sensing membrane in a direction parallel to the main surface of the sensing membrane to which the two measurement transducers of that pair of measurement transducers are located symmetrically is spaced apart by 90° in a circumferential direction from an axis extending through the center of the sensing membrane in a direction parallel to the first and the second main surfaces of the sensing membrane to which two measurement transducers of a neighboring pair of measurement transducers are located symmetrically. Advantageous of such exemplary arrangements are described below.

Furthermore, it is provided a torque sensor device comprising a sensing membrane according to one of the above-described embodiments. According to an embodiment the torque sensor device additionally comprises a stiffener arranged below the second main surface of the sensing membrane. The stiffener provides for increased insensitivity against cross loads.

The stiffener may be attached to the second main surface of the sensing membrane, in particular, by welding, for example, laser welding, or by means of a fastening means, for example, comprising screws.

In order to reliably increase the insensitivity against cross loads it may be advantageous that the stiffener has a thickness larger than the average thickness of the sensing membrane, in particular, a thickness of 150 % to 400 % of the average thickness of the sensing membrane. In principle, the thickness of the stiffener may be chosen depending on the (initial) thickness of the sensing membrane.

Furthermore, it is provided a torque sensor device comprising a circular body comprising an annular inner flange and an annular outer flange and a circular intermediate portion located between the annular inner flange and the annular outer flange, wherein the annular inner flange is located closer to the center of the circular body than the annular outer flange. The circular intermediate portion is a continuously solid portion (comprising no openings/cutouts) that at least partially may have a smaller thickness in an axial direction as the inner and/or outer flange. In principle, the circular body may be a monolithic body or may comprise parts attached to each other. The circular body of the torque sensor device may be or comprise the sensing membrane according to one of the above-described embodiments. Furthermore, the torque sensor device may comprise the above-described thickening element and/or stiffener arranged below the circular body/sensing membrane.

This compact configuration with an intermediate portion extending continuously from the inner flange to the outer flange in a radial direction allows for using the torque sensor device for sealing, for example, of a gear box without the need for an additional sealing means, like a sealing membrane, as it is necessary in the art. For example, the torque sensor device is suitable for sealing a gear box of a robot joint.

According to an embodiment, inner force application openings are formed in the inner flange and outer force application openings are formed in the outer flange. Torque to be measured is transferred, for example, by a rotating shaft under consideration and some static member, via connection members connected to the inner and outer force application openings. Thereby, the torque applied between the inner and outer flanges can be measured.

A plurality of measurement transducers may be formed in and/or on the circular intermediate portion, particularly, in a pairwise manner. The measurement transducers may comprise or consist of at least one of silicon gages, foil strain gages, and thin layer strain gages. Particularly, the pairs of measurement transducers may be arranged symmetrically about an axial direction (axis extending through the center of the circular body in a direction perpendicular to the main surface of the circular body) of the torque sensor device. The strain gages may sense shear strain, particularly, oriented 45° inclined to the radial axis running through the center of the circular body in a direction parallel to the main surface of the circular body to which the strain gages of a pair of strain gages are symmetrically arranged. Pairs of measurement transducers that are located opposite to each other define a measurement channel. The arrangement allows for eliminating or largely reducing the effects of tilts and radial and axial loads on the measurement of the torque and, thus, allows for an increased accuracy of the measurement results obtained by means of the torque sensor device of the invention (see also detailed description below).

According to a particular embodiment, the plurality of measurement transducers comprises at least four pairs of measurement transducers wherein the two measurement transducers of each of the pairs of measurement transducers are located symmetrically to an axis extending through the center of the circular body in a direction parallel to the main surface of the circular body (radial axis). Such an arrangement may be advantageous with respect to the measurement accuracy by reliably suppressing influences of radial and axial loads as well as tilts.

Four pairs of measurement transducers (for example, exactly four pairs of measurement transducers) may be provided wherein for each of the four pairs of measurement transducers it holds that an axis extending through the center of the circular body in a direction parallel to the main surface of the circular body to which the two measurement transducers of that pair of measurement transducers are located symmetrically is spaced apart by 90° in a circumferential direction from an axis extending through the center of the circular body in a direction parallel to the main surface of the circular body to which two measurement transducers of a neighboring pair of measurement transducers are located symmetrically. The measurement accuracy may be enhanced by this arrangement due to reliably suppressing influences of radial and axial loads as well as tilts.

With respect to reducing the effects of radial loads on the measurement of the torque of an object under consideration it might be advantageous to form in the circular intermediate portion tapered/thinned out portions not extending completely through the thickness direction of the intermediate portion, i.e., in a direction along an axis extending through the center of the circular body in a direction perpendicular to the main surface of the circular body. The tapered/thinned out portions are, for example, located closer the outer flange than the inner flange and may have longer extensions in a circular direction than in a radial direction.

In particular, the centers of each of the tapered out portions in a circumferential direction may be spaced apart from an axis extending through the center of the circular body in a direction parallel to the main surface of the circular body with respect to which two measurement transducers of a pair of measurement transducers are located symmetrically (this axis defining a measurement channel) by 22.5° in a circumferential direction.

Alternatively or additionally to the tapered out portions some radially elastic area may be provided in the intermediate portion, for example, located closer to the inner flange than the outer flange or substantially in the middle (in the radial direction) between the inner flange and the outer flange. The radially elastic area may comprise or consist of a groove formed in the intermediate portion of the circular body.

The measurement of a torque by means of the inventive torque sensor device may be based on strain gages representing the measurement transducers. The strain gages may be connected to a Wheatstone bridge circuitry that becomes unbalanced when a torque is applied and outputs a voltage (caused by the resistance change of the strain gages) proportional to the applied torque. Thus, according to an embodiment, the inventive torque sensor device comprises a first printed circuit board arranged over the intermediate portion and comprising a Wheatstone bridge circuitry electrically connected to the measurement transducers. The first printed circuit board may also comprise a DC or AC excitation source for the Wheatstone bridge circuitry.

Moreover, the torque sensor device may comprise a second printed circuit board arranged above the first printed circuit board and comprising a circuitry for signal conditioning, in particular, means for analogue-to-digital conversion and/or amplification of signals provided by the Wheatstone bridge circuitry of the first printed circuit board. The second printed circuit board may cover the first printed circuit board in order to protect it and the sensitive circuitry formed on the first printed circuit board and at the bottom of the second printed circuit board facing the first printed circuit board.

Furthermore, it is provided a robot, in particular, a collaborative robot, comprising a joint, wherein the joint comprises a gear box, and wherein the robot further comprises a torque sensor device according to one of the above-described embodiments. Particularly, the torque sensor device may be attached to the joint and positioned to seal the gear box of the joint of the robot. When the torque sensor device comprises a stiffener, the robot may not comprise any cross roller bearing, since the stiffener may reliably provide for sufficient stiffness against axial loads and tilting moments applied by the joint of the robot. Thus, costs can be reduced since no cross roller bearing might be necessary.

Additionally, it is provided a method of measuring a torque of a shaft positioned in a gear box, in particular, a gear box of a joint of a robot, the method comprising attaching the torque sensor device according to one of the above-described embodiments to the gear box such that the gear box is sealed and measuring the torque by means of that torque sensor device that is sealing the gear box.

Further features and exemplary embodiments as well as advantages of the present disclosure will be explained in detail with respect to the drawings. It is understood that the present disclosure should not be construed as being limited by the description of the following embodiments. It should furthermore be understood that some or all of the features described in the following may also be combined in alternative ways.
- Figures 1A and 1B: show torque sensor devices each comprising an inner flange, an outer flange and a solid intermediate portion continuously extending from the inner flange to the outer flange in a radial direction in accordance with embodiments of the present invention.
- Figure 2: illustrates the torque sensor device of Figs. 1A or 1B and comprising a first printed circuit board.
- Figure 3: illustrates the torque sensor device of Fig. 2 and comprising a second printed circuit board.
- Figures 4A to 4D: illustrate torque measurement with compensation for tilt, axial load and radial load.
- Figure 5: shows another embodiment of a torques sensor device comprising tapered out regions in the intermediate portion.
- Figure 6: shows a sensing membrane and a stiffener configured to be comprised in a torque sensor device according to an embodiment.
- Figure 7: presents a cross sectional view of the sensing membrane and the stiffener shown in Figure 6.
- Figure 8: illustrates the homogenization of a tilting moment applied to a sensing membrane and reduction of axial load applied to the sensing membrane in a region where a thickening element is provided.

The present invention provides a sensing membrane and a torque sensor device that allows for accurately measuring the torque of an object, for example, a rotating shaft or a robot joint wherein the measurement is not significantly affected by axial or radial loads or tilting moments.

In particular, the torque sensor device can be used for sealing purposes, for example, for sealing a gear box. The torque sensor device is suitable for measuring the torque of a joint of a (collaborative) robot, for example. Torque control based on measurements made by the torque sensor device can be advantageously implemented in robots to facilitate robot-human interactions, for example.

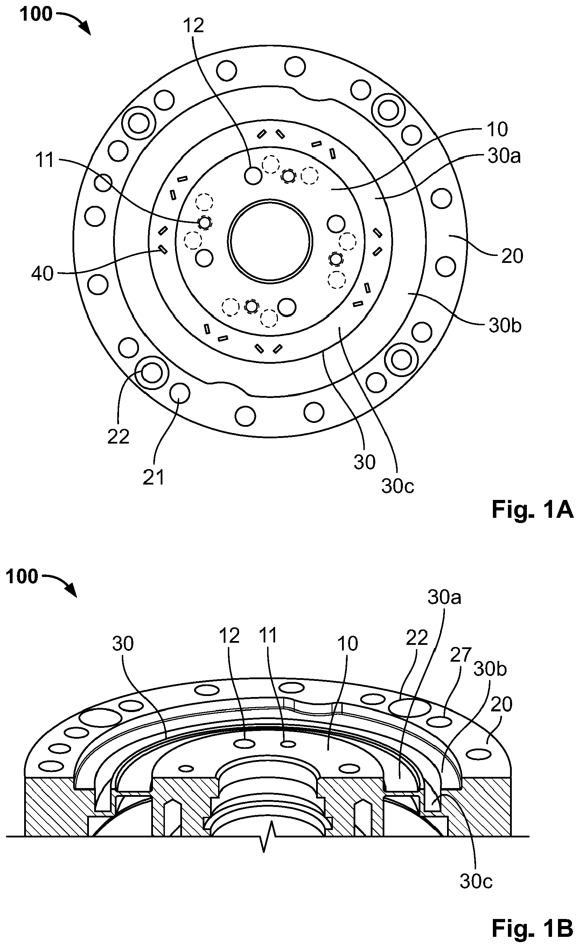

Exemplary embodiments of the inventive torque sensor device 100 are shown in Figures 1A and 1B. The torque sensor device 100 comprises an inner flange 10 and an outer flange 20. An intermediate portion 30 continuously extends radially from the inner flange 10 to the outer flange 20. The inner flange 10, the outer flange 20 and the intermediate portion 30 form a circular body, for example, a monolithic circular body/membrane. The circular body may consist of or comprise, for example, steel, aluminum or an aluminum alloy. Different parts of the circular body may be made of different materials when no monolithic circular body is provided. No openings extending through the entire material are formed in the intermediate portion 30. Thus, the intermediate portion 30 can serve as a seal, for example, for sealing a gear box.

The intermediate portion 30 may comprises sub-portions 30a and 30b that might be separated from each other by a separator 30c. The separator 30c may be a rim or it may be a circumferential groove 30c as illustrated in Figure 1B. Such a circumferential groove 30c may serve to orientate/direct the applied stress and strain with respect to the strain gage positions.

A plurality of pairwise measurement transducers 40 is formed on the intermediate portion 30, for example sub-portion 30a, as it is shown in the top view of the main surface of the torque sensor device 100 of Figure 1A. The measurement transducers 40 are arranged symmetrically about an axis running through the center of the circular body perpendicular to the main surface (axial axis). The measurement transducers 40 can, in principle, be strain-sensitive transducers, in particular, strain gages.

Moreover, in the inner flange 10 inner force application openings 11 and 12 of different sizes are formed and in the outer flange 20 outer force application openings 21 and 22 of different sizes are formed. The inner and outer force application openings 11, 12, 21 and 22 may be bores extending in an axial direction. The bores are open at least one side or the respective flange and may have any suitable geometrical shape, for example, a circular or polygonal shape cross-section.

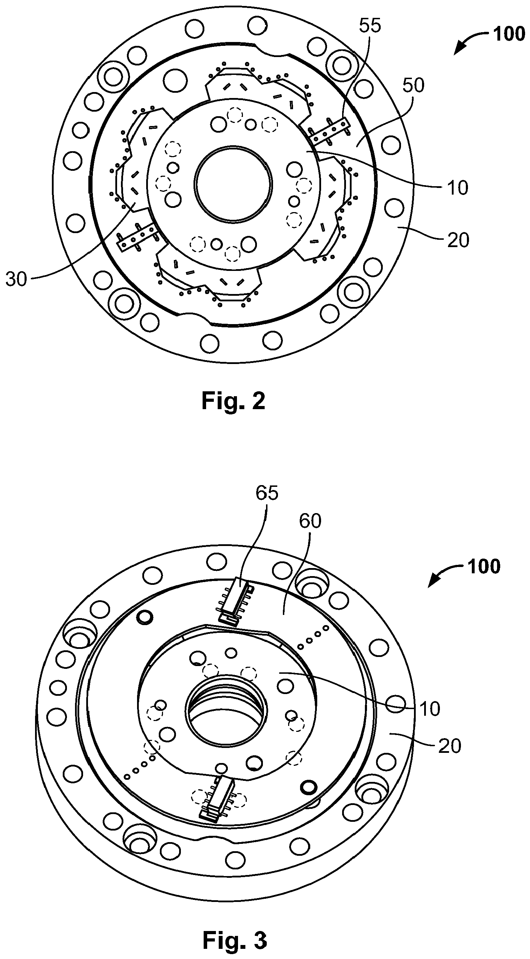

Figure 2 shows the torque sensor of Figure 1A or 1B wherein a first printed circuit board 50 comprising some circuitry devices as, for example, resistors and capacitors, and a connector 55 for connection to another printed circuit board 60 (see below) is provided over the intermediate portion 30. The measurement transducers 40 may be connected with an included measurement portion to the intermediate portion 30 and they may have free connecting portions for connection to the first printed circuit board 50 and, thus, the circuitry devices of the first printed circuit board 50. Particularly, the first printed circuit board 50 may comprise Wheatstone bridge elements (resistors) for converting an applied torque to voltage output signals as it is known in the art. Depending on actual applications half or full Wheatstone bridge may be used.

The first printed circuit board 50 may be covered by a second printed circuit board 60 as it is illustrated in Figure 3. The second printed circuit board 60 protects the measurement transducers 40 and circuitry devices 55 against the environment. Particularly, the second printed circuit board 60 may have sensitive circuitry devices at the bottom (facing the first printed circuit boards 50) and a connector 65 for connection to the first printed circuit board. The second printed circuit board 60 is configured for signal conditioning, for example, for analogue-to-digital conversion of voltage output signals supplied by the circuitry devices of the first printed circuit board 50. Signal conditioning may also include amplification of voltage output signals supplied by the circuitry devices of the first printed circuit board 50.

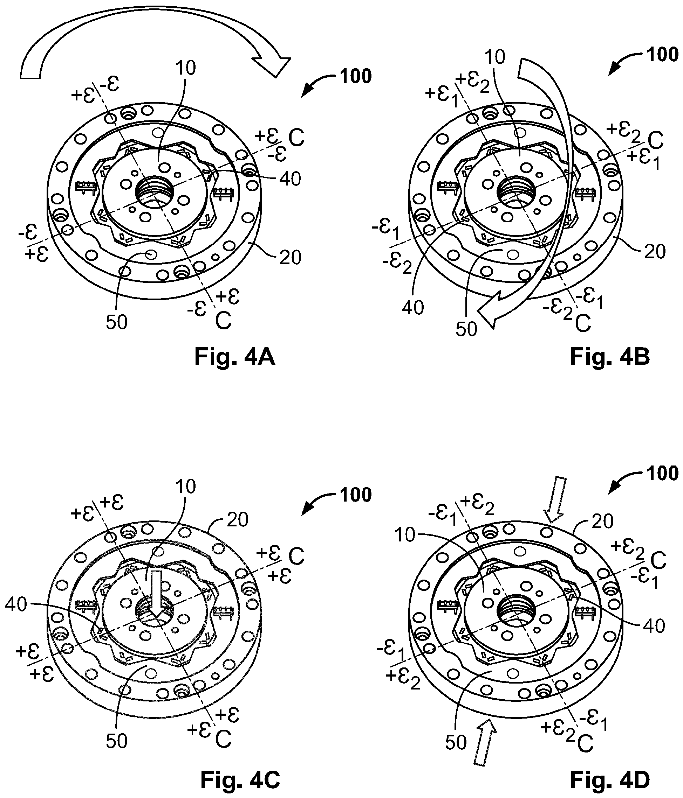

As already mentioned measurement transducers 40 can be arranged about an axial axis running through the center of the circular body in a direction perpendicular to the main surface of the circular body. For example, one or two pairs of measurement transducers 40 may be arranged spaced apart from one or two neighboring pairs of measurement transducers 40 by 90° in a circumferential direction. Figures 4A to 4D illustrate an embodiment wherein strain gages 40 are arranged pairwise symmetrically about an axial axis running through the center of the circular body in a direction perpendicular to the main surface of the circular body and wherein two measuring channels C are defined by opposing pairs of strain gages 40 that are spaced apart from each other by 90° (from one channel to the other channel) in a circumferential direction. Each measuring channel C runs through the center of particular pairs of strain gages 40 that are arranged opposite to each other.

A torque (indicated by the arrow in Figure 4A) can be measured based on a differential strain +ε and -ε where +ε is experienced by one strain gage of a pair of strain gages 40 and -ε is experienced by the other strain gage of the pair of strain gages 40. The strain gages 40 are connected to a Wheatstone bridge circuitry formed on a printed circuit board 50. Due to the selected geometry of the arrangement of the strain gages 40 (and the corresponding architecture of the Wheatstone bridge circuitry) the voltage output signal supplied by the Wheatstone bridge circuitry caused by an applied torque (strain in the intermediate portion of the torque sensor device on which the strain gages 40 are provided for sensing the strain) is proportional to ∑_{ε} = 4 ε + 4 ε = 8 ε, i.e., a sufficiently high wanted voltage output signal can be provided.

On the other hand, perturbations due to tilt and axial and radial loads can be largely suppressed as illustrated in Figures 4B to 4D. The arrow in Figure 4B indicates a tilt that might be applied to the torque sensor device. The tilt applied to the torque sensor device 100 results in differential strains +ε₁ and +ε₂, +ε₂ and +ε₁, -ε₂ and -ε₁, and -ε₁ and -ε₂, respectively, for the four pairs of strain gages 40 defining the measuring channels C. Accordingly, the strain caused by the tilt is compensated by the chosen geometry of the arrangement of the strain gages 40 (and the corresponding architecture of the Wheatstone bridge circuitry): ∑_{ε} = ε₁ - ε₁ + ε₂ - ε₂ = 0 such that it does not contribute to a voltage output signal being proportional to the applied torque a shown in Figure 4A.

In order to achieve an accurate torque measurement it is also necessary to compensate for any axial loads. Such kind of compensation can also be achieved by the selected geometry of the arrangement of the strain gages 40 (and the corresponding architecture of the Wheatstone bridge circuitry) as it is illustrated in Figure 4C (the arrow indicates the applied axial load). The axial load (due to the axially symmetrically arrangement of the strain gages 40) results in strains +ε at each of the strain gages 40 and, therefore, in a zero net effect: ∑_{ε} = 4 ε - 4 ε. With respect to compensating for tilt and axial loads it might be advantageous to locate the strain gages 40 at the same radial distance to the inner flange 10 and to the outer flange 20.

Compensation for radial loads by the selected geometry of the arrangement of the strain gages 40 (and the corresponding architecture of the Wheatstone bridge circuitry) is illustrated in Figure 4D. The applied radial load is indicated by the arrows. The radial load results in differential strains -ε₁ and +ε₂, +ε₂ and -ε₁, -ε₁ and +ε₂, and +ε₂ and -ε₁, respectively, for the four pairs of strain gages 40 defining the two measuring channels C. Accordingly, the contribution to the voltage output signal of the Wheatstone bridge circuitry of the printed circuit board 50 is proportional to ∑_{ε} = -2 ε₁ + 2 ε₂ + 2 ε₁ - 2 ε₂ = 0.

However, it has to be noted that exact compensation for radial loads as illustrated in Figure 4D might not be achieved, if some radial loads are applied in a radial direction shifted with respect to the measuring channels C in the circumferential direction by 22.5°. In this case, some ∑_{ε} ≠ 0 may occur and negatively affect the accuracy of the measurement of the torque. In order to alleviate this problem some radially elastic portion by be provided in the intermediate portion 30 of the torque sensor device 100. The radially elastic portion by be realized by some groove 30c as illustrated in Figure 1B. The radially elastic portion may be machined on the top or the bottom of the intermediate portion 30.

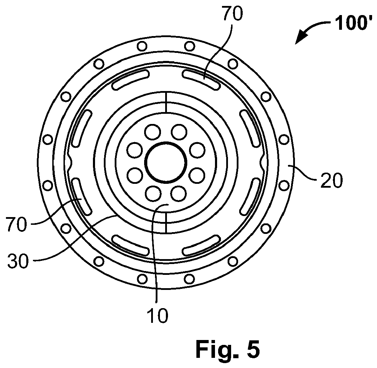

According to another approach the problem of non-compensation of radial loads that are applied in a radial direction shifted with respect to the measuring channels C in the circumferential direction by 22.5° tapered out portions 70 can be formed in the intermediate portion 30 of the torque sensor device 100' as it is illustrated in Figure 5. The tapered out portions 70 may be machined on the top or the bottom of the intermediate portion 30. In the embodiment shown in Figure 5 the tapered out portions 70 are arranged closer to the outer flange 20 than the inner flange 10 at the 22.5° positions. The tapered out portions 70 have larger dimensions in the circumferential direction than the radial direction.

Experiments have proven that such an arrangement of the tapered out portions 70 significantly reduces any contributions of the corresponding radial loads to ∑_{ε} and, thus, the measurement result. It has to be noted that the tapered out portions 70 have not to be punched through the intermediate portion 30 in order not to drop the advantageous sealing property of the torque sensor device 100'.

In accordance with the above-describe embodiments an accurately operating torque sensor device can be provided in a compact design with a reduced height as compared to the art and at low costs. It can seal a gear box without the need for any additional sealing means and provide at least a two channel measurement. Particularly, all of the measurement transducers involved can be formed on one and the same surface of the intermediate portion 30 of the torque sensor device 100, 100' described above.

Furthermore, herein it is provided a sensing membrane as described in the following. The sensing membrane may be or may be comprised in the circular body of the torque sensor device of one of the above-described embodiments. The sensing membrane comprises a thickening element that, according to embodiments, may be also comprised in the circular body of the torque sensor device of one of the above-described embodiments.

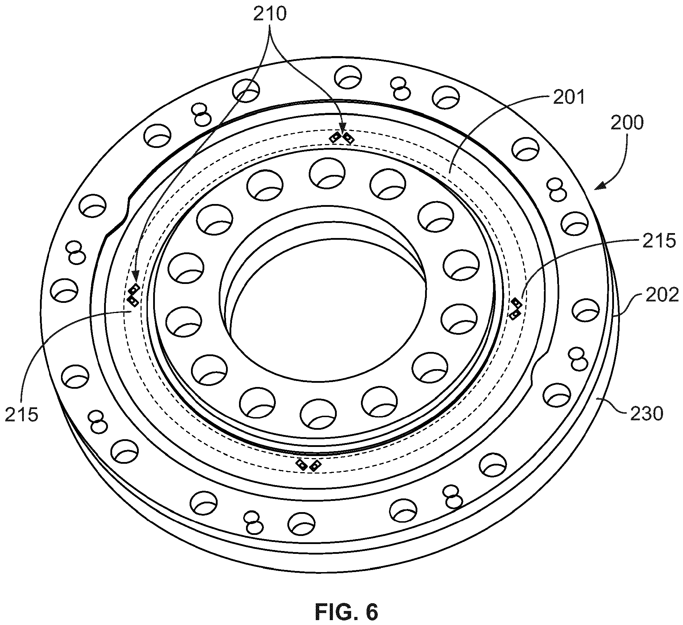

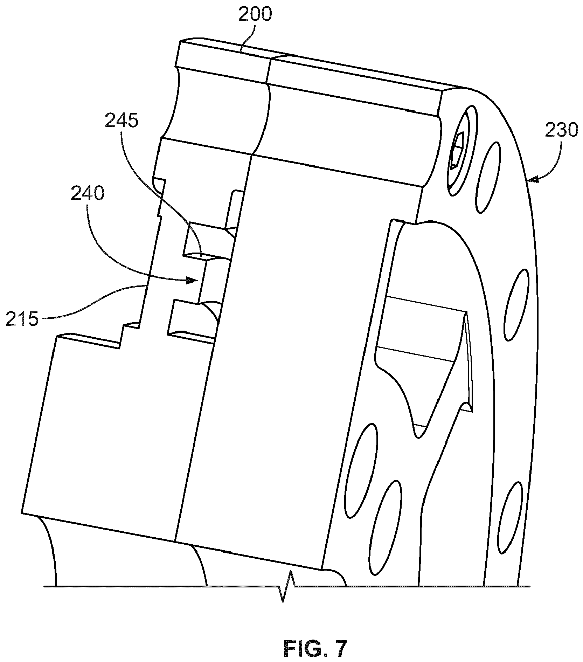

Figure 6 shows a circular sensing membrane 200 provided herein. Figure 7 shows a cross-sectional view of the configuration shown in Figure 6.

The sensing membrane 200 has a first (upper) main surface 201 and a second (lower) main surface 202. The sensing membrane 200 may consist of or comprise, for example, steel, aluminum or an aluminum alloy. Measurement transducers 210 are provided in a circular transducers area 215. The measurement transducers 210 may comprise or consist of at least one of silicon gages, foil strain gages, and thin layer strain gages. The circular transducers area 215 may be formed in a thinned regionof the sensing membrane 200. The sensing membrane 200 according to the embodiment shown in Figure 6 comprises regions of different thicknesses. Alternatively, the sensing membrane 200 may have a uniform thickness. Arrangement of the measurement transducers 210 and structuring of the sensing membrane 200 shown in Figure 6 may be similar or equal to arrangements described above and the structuring of circular body described above and shown in Figures 1 to 4b.

Optionally a stiffener 230 is attached to the second (lower) main surface 202 of the sensing membrane 200. For example, the stiffener 230 may be thicker than the sensing membrane 200. A thickness of the stiffener 230 may be in the range of 150 % to 400 % of the average thickness of the sensing membrane 200. The stiffener 230 may be made of the same material as the sensing membrane 200 and may be attached to second main surface 202 of the sensing membrane 200 by (laser) welding or by means of a screw assembly.

The stiffener 230 may be provided in order to reduce sensitivity of a torque sensor device to cross loads. For example, in the context of robots torque measurement of robot joints/arms might be negatively affected by cross loads, particularly, when cross roll bearings are not provided for cost reasons. Provision of the stiffener 230 provides a high stiffness against cross and axial loads but does not influence significantly sensitivity regarding torque.

As can be seen in Figure 7 a circular thickening element (raiser) 240 is formed below the circular transducers area 215 of the sensing membrane 200. The thickening element 240 may be continuously formed or may comprise discontinuations (along the circle) between actual pairs of measurement transducers 210. In particular, the thickening element 240 may be arranged opposite to the measurement transducers 210. The thickening element 240 may be integrally formed with the sensing membrane 200. In the embodiment shown in Figure 7 the thickening element 240 is basically formed in a u-shape with sidewalls 245 extending perpendicular from the second main surface 202 of the sensing membrane 200 in the transducers area 215. Other geometrical shapes are possible. For example, the u-shape may be amended by rounding the corners whereby a rounded convex shape of the thickening element 240 is obtained.

The thickening element 240 may extend perpendicular to the second main surface with a height of at least 25 % of the thickness of the sensing membrane in a transducers area wherein the measurement transducers are positioned and at most 150 % of the thickness of the sensing membrane 200 in the transducers area 215 wherein the measurement transducers 210 are positioned.

During the manufacture of the sensing membrane 200 and a torque sensor device comprising the same one or more of the measurement transducers 210 may be slightly dislocated with respect to radial and/or angular positions. As already mentioned, the arrangement of the measurement transducers 210 may be similar or equal to the kinds of arrangement described above. The accuracy of the positioning of the measurement transducers 210 is crucial for the insensitivity of the torque sensor device comprising the sensing membrane 200 to cross loads. The thickening element 240 homogenizes strain applied to the circular transducers area 215 and, therefore results in a lower sensitivity to manufacturing tolerances that cause axial loads applied to the sensing membrane 200 / transducers area 215 as compared to the art.

Experiments have shown that employment of a u-shaped or convex shaped thickening element 240 with a height perpendicular to the second main surface 202 of the sensing membrane 200 in the transducers area 215 between 0.25 to 1 times the thickness of the sensing membrane in the transducers area 215 may result in a rigidity (insensitivity) against tilt moments of about twice the rigidity for the case without a thickening element 240. When the stiffener 230 is additionally provided the rigidity gain against tilting moments is up to a factor of 5 or even 10 depending on the actual geometric shape of the thickening element 240.

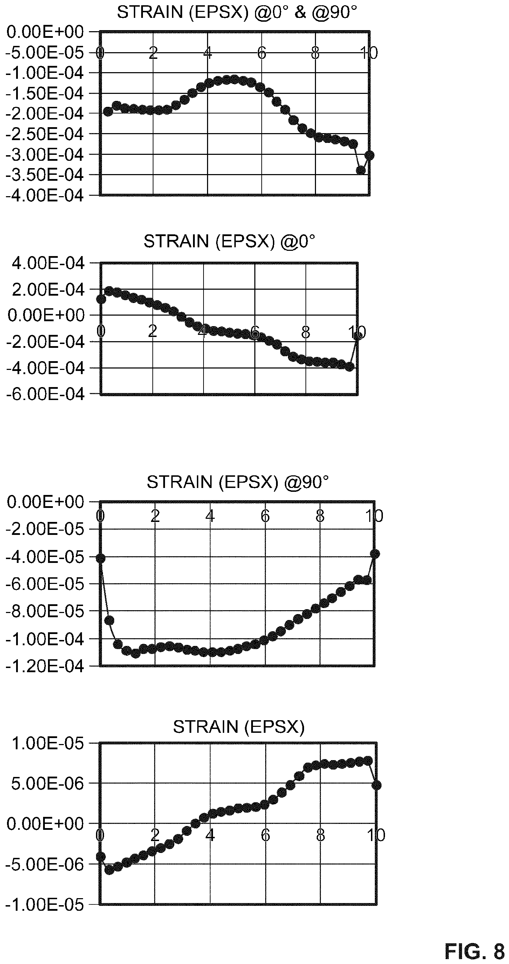

Figure 8 exemplarily illustrates the homogenization of strain applied to the transducers area 215 of the sensing membrane caused by the thickening element 240. Strain as a function of a radial position of the measurements is shown wherein the double arrow indicates the radial width of the thickening element 240. The left-hand graph shows the homogenization effect on applied torque, the two central graph show the homogenization effect on applied tilt and the right-hand graph shows the suppression of axial load. The gentler slopes (plateaus) caused by the thickening element 240 can be easily identified.

List of reference numbers:
- 10: inner flange
- 11, 12: inner force application openings
- 21, 22: outer force application openings
- 20: outer flange
- 30: intermediate portion
- 30a, 30b: sub-portions
- 30c: separator
- 40,210: measurement transducers
- 50: first printed circuit board
- 55: connector of the first printed circuit board
- 60: second printed circuit board
- 65: connector of the second printed circuit board
- 70: tapered out portions
- 100, 100': torque sensor device
- 200: sensing membrane
- 201: first main surface of sensing membrane
- 202: second main surface of sensing membrane
- 215: transducers area
- 230: stiffener
- 240: thickening element
- 245: sidewalls of thickening element

## Claims

1. Sensing membrane (200) for a torque sensor device, the sensing membrane (200) comprising
a first main surface (201) forming a top of the sensing membrane (200);
a plurality of measurement transducers (210) former over the first main surface (201);
a second main surface (202) opposite to the first main surface (201) and forming a bottom of the sensing membrane (200); and
a thickening element (240) formed below the second main surface (202) opposite to the measurement transducers (210).

2. The sensing membrane (200) according to claim 1, wherein the sensing membrane (200) is a circular sensing membrane (200) and the measurement transducers (210) are arranged in a circular transducers area (215) of the sensing membrane (200) and the thickening element (240) is arranged opposite to the circular transducers area (215), in particular, only opposite to the circular transducers area (215).

3. The sensing membrane (200) according to claim 1 or 2, wherein the thickening element (240) is or comprises a u-shaped or v-shaped step portion comprising sidewalls (245) extending perpendicular from the second main surface (201) of the sensing membrane (200).

4. The sensing membrane (200) according to one of the preceding claims, wherein the thickening element extends perpendicular to the second main surface (201) with a height of at least 25 % of the thickness of the sensing membrane (200) in a transducers area (215) wherein the measurement transducers (210) are positioned and at most 150 % of the thickness of the sensing membrane (200) in the transducers area (215).

5. The sensing membrane (200) according to one of the preceding claims, wherein the thickening element (240) is formed integrally with the sensing membrane (200).

6. The sensing membrane (200) according to one of the preceding claims, wherein the measurement transducers (210) are positioned axially symmetrically to an axis extending through the center of the sensing membrane (200) in a direction perpendicular to the first and the second main surfaces (201, 202) of the sensing membrane (200).

7. The sensing membrane (200) according to claim 6, wherein the measurement transducers (210) comprise at least two pairs or four pairs of measurement transducers and wherein the two measurement transducers of each of the pairs of measurement transducers (210) are located symmetrically to an axis extending through the center of the sensing membrane (200) in a direction parallel to the first and the second main surfaces (201, 202) of the sensing membrane (200).

8. The sensing membrane (200) according to claim 7, wherein four pairs of measurement transducers (210) are provided and for each of the four pairs of measurement transducers (210) it holds that an axis extending through the center of the sensing membrane (200) in a direction parallel to the main surface of the sensing membrane (200) to which the two measurement transducers (210) of that pair of measurement transducers are located symmetrically is spaced apart by 90° in a circumferential direction from an axis extending through the center of the sensing membrane (200) in a direction parallel to the first and the second main surfaces (201, 202) of the sensing membrane (200) to which two measurement transducers (210) of a neighboring pair of measurement transducers (210) are located symmetrically.

9. Torque sensor device (100, 100'), comprising a sensing membrane (200) according to one of the preceding claims.

10. The torque sensor device (100, 100') according to claim 9, further comprising a stiffener (230) arranged below the second main surface (201) of the sensing membrane (200).

11. The torque sensor device (100, 100') according to claim 10, wherein the stiffener (230) is attached to the second main surface (201) of the sensing membrane (200), in particular, by welding, for example, laser welding, or by means of a fastening means, for example, comprising screws.

12. The torque sensor device (100, 100') according to claim 10 or 11, wherein the stiffener (230) has a thickness larger than the average thickness of the sensing membrane (200), in particular, a thickness of 150 % to 400 % of the average thickness of the sensing membrane (200).

13. Robot, in particular, a collaborative robot, comprising a joint, wherein the joint comprises a gear box, and further comprising a torque sensor device (100, 100') according to one of the claims 9 to 12.

14. Robot, in particular, a collaborative robot, comprising a joint, wherein the joint comprises a gear box, and further comprising a torque sensor device (100, 100') according to one of the claims 9 to 12 and attached to the joint and wherein the joint does not comprise any cross roller bearing.
